# EUROPÄISCHE PATENTSCHRIFT

(11) **EP 2 241 360 B1**
(45) Veröffentlichungstag und Bekanntmachung des Hinweises auf die Patenterteilung: **09.05.2012**
(21) Anmeldenummer: 10171833.6
(22) Anmeldetag: 19.07.2006
(51) Int. Cl.: B01D 29/11

(54) **Filterelement**
Filter element
Elément de filtre

(30) Priorität: 29.07.2005 DE 102005036366
(43) Veröffentlichungstag der Anmeldung: 20.10.2010
(62) Teilanmeldung aus: 06777847.2
(73) Patentinhaber: MANN + HUMMEL GMBH, 71638 Ludwigsburg (DE)
(72) Erfinder: Eisengräber-Pabst, Jobst, 71726, Benningen (DE); Rapp, Siegfried, 71711, Murr (DE); Trautmann, Dr. Pius, 70499, Stuttgart (DE); Lampert, Johannes, 82237, Wörthsee (DE)

(56) Entgegenhaltungen:
- DE-A1- 10 244 925
- GB-A- 2 020 995
- US-A- 4 652 285

## Beschreibung

### Technisches Gebiet

Die Erfindung betrifft ein Filterelement nach dem Oberbegriff des Anspruchs 1.

### Stand der Technik

Filterelemente dieser Art werden meist in Verbindung mit stirnseitig angeordneten Endscheiben als Filterelemente verwendet. Die zick-zack-förmig gefalteten Filtermedien können zur Stabilisierung nach innen auf einen Holkörper beispielsweise ein Mittelrohr abgestützt sein. Bedingt durch die Faltung sind die Faltenspitzen an der, dem Zentrumabgewandten, Außenseite sehr labil. Dies kann bei der Handhabung des Filterelementes im Wartungsfall oder ein Betriebszustand zum Einbeulen oder Einknicken des Filtermediums führen. Um die Faltung der Filterelemente zu stabilisieren ist aus der DE 102 44 925 ein Verfahren bekannt, in welchem das Filtermedium von einem mit Schmelzkleber getränkten Faden umwickelt wird. Zum Tränken des Fadens mit Schmelzkleber wird der Faden durch ein Schmelzbad gezogen und mittels nachfolgender Fadenführungen auf das Filtermedium gewickelt. Der Faden kommt dabei im plastischen Zustand mit dem Filtermedium in Berührung und haftet so an den äußeren Faltenspitzen an.

Es hat sich jedoch gezeigt, dass die Haftfähigkeit zwischen Faltfaden und Faltenspitzen oft nicht ausreichend ist und sich der Faden insbesondere nach Einwirkung von Feuchtigkeit bei geringen Belastungen löst.

Der Erfindung liegt die Aufgabe zugrunde, ein stabiles und sicher zu handhabendes Filterelement zu schaffen.

### Offenbarung der Erfindung

Diese Aufgabe wird durch eine Filtermediumsanordnung, insbesondere ein Filterelement gelöst welche umfasst: ein hohlzylindrisches, zick-zack-förmig gefaltetes Filtermedium, wobei die Stirnseiten der Zick-Zack-Faltung durch Endscheiben abgedichtet ist, sowie einen mit einem Schmelzkleber getränkten, schraubenförmig auf das Filtermedium gewickelten Faden, welcher an den äußeren Faltenspitzen anhaftet, wobei der schraubenförmig gewickelte Faden Bereiche mit verschiedenen Gewindesteigungen aufweist, wobei ein erster Bereich als Griffschutzbereich ausgebildet ist und ein zweiter Bereich als Stabilisierungsbereich ausgebildet ist.

In einer Ausführungsform ist im Griffschutzbereich die Gewindesteigung derart abgestimmt, dass die Filtermediumsanordnung ohne die Gefahr des Eindrückens handhabbar ist.

In einer Ausführungsform ist in dem Stabilisierungsbereich die Gewindesteigung am größten. Der Faden dient in diesem Bereich insbesondere nur zur radialen Stabilisierung der Falten des Filtermediums.

In einer vorteilhaften Ausführungsform ist ein an eine Stirnseite des Filtermediums angrenzender Verriegelungsbereich vorgesehen, in welchem der Faden keine oder eine minimale Gewindesteigung aufweist und/oder sich überlappt.

In einer vorteilhaften Ausführungsform weist der Faden im Griffschutzbereich eine Steigung von ca. 5-8 mm auf. Hierdurch wird eine sichere Handhabung des Filterelements ohne die Gefahr des Eindrückens ermöglicht.

In einer vorteilhaften Weiterbildung weist der Faden im Stabilisierungsbereich eine Steigung von ca. 30 mm auf.

In einer Ausführungsform sind mehrere Fäden als Doppelgewinde aufgebracht.

In einer Ausführungsform ist der Faden derart aufgewickelt, dass beim Aufwickeln der plastische Zustand des beschichteten Fadens durch thermische Mittel aufrechterhalten wird, wobei die thermischen Mittel zur Verzögerung des Abkühlungsvorganges auf den sich mit den Faltenspitzen in Berührung befindlichen Faden einwirken.

Eine weitere Erfindungsvariante betrifft eine erfindungsgemäße Filtermediumsanordnung, die nach einem insbesondere nachstehend beschriebenen Verfahren hergestellt ist und aus einem im Wesentlichen hohlzylindrischen, zick-zack-förmig gefalteten Filtermedium besteht. Die Stirnseiten der Zick-Zack-Faltung sind dabei durch Endscheiben abgedichtet und weisen Konturen auf eine dichte Verbindung an korrespondierende Anschlusskonturen auf. Fäden, die zur Stabilisierung des Filtermediums dienen, können sich dabei bis in den Bereich der Endscheiben erstrecken. Die Vorzüge des Filtermediums liegen in der erhöhten Festigkeit der Ver bindung zu den stabilisierenden Fäden, dieses ist besonders beim Auftreten von Feuchtigkeit sehr positiv bemerkbar. Eine Gefahr des Ablösens des Fadens bei der Handhabung und Anwendung bzw. durch die Belastung von Pulsationen und der Aufladung von Schmutz ist stark minimiert. Dadurch kann auch die Leistungsfähigkeit des Filtermediums hinsichtlich Lebensdauer, Abscheidegrad und Schmutzkapazität deutlich gesteigert werden.

Im Falle eines Verfahrens zur Stabilisierung von gefalteten Filtermedien, durch einen Faden, insbesondere geeignet zur Verbesserung der Haftung des Fadens am Filtermedium von erfindungsgemäßen Filterelementen, wird der Faden mit einem Schmelzkleber beschichtet und im plastischen Zustand über die Faltenspitzen aufgerollt, wobei der plastische Zustand des beschichteten Fadens durch thermische Mittel aufrechterhalten wird, wobei die thermischen Mittel zur Verzögerung des Abkühlungsvorganges auf den sich mit den Faltenspitzen in Berührung befindlichen Faden einwirken, wobei der Faden in mindestens zwei Bereichen mit unterschiedlicher Gewindesteigung aufgewickelt wird, und wobei ein erster Bereich als Griffschutzbereich ausgebildet ist und ein zweiter Bereich als Stabilisierungsbereich ausgebildet ist.

Das Verfahren beruht in einem Aspekt auf dem Gedanken, dem sich bereits im plastischen Zustand befindlichen Schmelzkleber durch Einwirkung von thermischer Energie eine bessere Haftfähigkeit gegenüber dem Filtermedium zu verleihen. Üblicherweise wird der Faden mit einem thermisch verflüssigten Schmelzkleber getränkt und durch Fadenführung auf das Filtermedium gewickelt. Der Faden kann beispielsweise rund oder auch einen rechteckigen, bandähnlichen Querschnitt aufweisen. Fäden aus synthetischen Materialien haben sich aufgrund ihrer guten Saugfähigkeit als sehr geeignet erwiesen. Durch die thermische Einwirkung in den sich bereits im plastischen Zustand befindlichen Schmelzkleber wird die Haftfähigkeit des Schmelzklebers gegenüber den Medienfasern und die Eindringtiefe in das Medium verbessert. Dieser Effekt beruht auf der verzögerten Aushärtung des Schmelzklebers. Eine thermische Einwirkung kann beispielsweise durch eine Behandlung mit Hitzereflektoren erfolgen, welche die Abkühlung des Schmelzklebers verzögern.

Versuche haben gezeigt, dass die Abzugskraft des Fadens vom Filtermedium im trockenen Zustand um das Vierfache und im feuchten Zustand um das zehnfache erhöht werden können. Durch diese verbesserte Haftfähigkeit kann die Anzahl der Fäden bei gleicher Stabilität reduziert werden oder die Stabilität erhöht werden, ohne mehr Fadenmaterial aufzubringen.

Gemäß einer Weiterentwicklung des Verfahrens bietet es sich an, den mit Schmelzkleber getränkten Faden mit Heißluft, Infrarotstrahl oder Mikrowellen zu behandeln. Selbstverständlich können alle aus dem Stand der Technik bekannten Wärmequellen als thermische Mittel zum Einsatz kommen. Diese Temperatureinwirkungen auf die Schmelze können nur die bereits vorhandene Wärme des Schmelzklebers erhalten oder diese auch erhöhen. Dadurch wird es in vorteilhafter Weise erlaubt, den Faden über weitere Strecken zu führen und den Schmelzkleber mit optimaler Temperatur auf das Filtermedium aufzubringen, ohne eine Gefahr des Abtropfens zu riskieren.

In einer vorteilhaften Weiterentwicklung des Verfahrens sind die thermischen Mittel zwischen der Beschichtung des Fadens mit Schmelzkleber und der Berührung des Fadens mit den Faltenspitzen angeordnet. Hierdurch wird eine gleichmäßige Temperaturführung des Schmelzklebers erreicht, wodurch sich der Energieaufwand reduziert und die Abwärme bzw. die Erhitzung der Umgebung minimiert. Dies ist deshalb von Bedeutung, weil sich der Schmelzpunkt, der üblicherweise verwendeten Schmelzkleber bei ca. 200°C liegt.

In einer weiteren Variante des Verfahrens wirken die thermischen Mittel auf den bereits mit den Faltenspitzen in Berührung befindlichen Faden ein. Dadurch kann der Abkühlungsvorgang weiter verzögert werden. Davon ausgehend, dass eine feste Zeiteinheit für eine ausreichende Einschmelzung in das Medium nicht unterschritten werden kann, ist es möglich, den Wickelvorgang so zu beschleunigen und damit die Tagzeit zur Stabilisierung des Filtermediums zu verkürzen.

Gemäß einer besonderen Ausgestaltung des Verfahrens wird der bereits auf das Filtermedium aufgeschmolzene Faden abgekühlt, wodurch der Schmelzkleber beschleunigt aushärtet. Dies kann beispielsweise mit Anblasen durch Kaltluft erreicht werden. Durch die gezielte Abkühlung des Fadens bzw. des gesamten Filtermediums kann die Tagzeit zur Herstellung des Filtermediums stark reduziert werden. Dies kann insbesondere durch die Erhitzung des Fadens, der sich bereits auf dem Filtermedium befindet, in Verbindung mit erhöhter Wickelgeschwindigkeit und gezielter Abkühlung erreicht werden. In Folge der beschleunigten Aushärtung der Schmelze steht das Filtermedium auch schnell zur weiteren Bearbeitung zur Verfügung.

Gedanke einer weiteren Gestaltung des Verfahrens ist es, den mit Schmelzkleber beschichteten Faden durch eine Abstreifblende zu führen. An dieser Abstreifblende wird der Faden auf eine definierte Ausgangsdicke abgestreift. Die abgestreifte Schmelze kann wiederum ins Schmelzbad zurückgeführt werden. Zusätzlich zur Rückgewinnung überflüssiger Schmelze wird durch die Abstreifblende eine Vorspannung des Fadens erreicht, die eine gute Berührung und einen Andruck des Fadens auf die Faltenspitzen gewährleistet.

Gemäß einer weiteren Ausführung des Verfahrens wird der Faden schraubenförmig um das Filtermedium gewickelt. Dazu wird die Fadenzufuhr während der Rotation des Filtermediums über eine Längsrichtung des Filtermediums bewegt, wodurch eine Vorschubbewegung erreicht wird. Durch diese Vorschubbewegung wird eine Gewindesteigung definiert. Alternativ kann die Gewindesteigung bei konstanter Vorschubgeschwindigkeit oder bei stehender Fadenzuführung über eine Längsbewegung des Filtermediums erreicht werden. Die Einwirkung der thermischen Mittel kann sich dabei über einen Längsbereich des Filtermediums erstrecken, wodurch mehrere Fäden gleichzeitig erhitzt oder gekühlt werden können. Dadurch kann das gesamte Filtermedium vorteilhaft von einem zusammenhängenden Faden gestärkt werden.

Eine weitere Optimierung sieht vor, die Gewindesteigung des Fadens in unterschiedliche Bereiche aufzuteilen. Beispielsweise kann die Steigung an dem als Griffschutz ausgebildeten Bereich mit einer Steigung von ca. 5 bis 8 Millimeter und in dem zweiten als reine Stabilisierung ausgebildeten Bereich mit einer Steigung von ca. 30 Millimeter angebracht werden. Um im Bereich der Stirnseite der zylindrischen Außenfläche eine sichere Fixierung des Fadens zu erreichen, kann der Vorschub des Fadens in Längsrichtung derart minimiert werden, dass sich die Fäden überlappen, bzw. zwischen den Fäden eine geschlossene Schmelzschicht entsteht. Generell besteht auch die Möglichkeit mehrere Fäden parallel als Doppelgewinde aufzubringen.

Diese und weitere Merkmale von bevorzugten Weiterbildungen der Erfindung gehen außer aus den Ansprüchen auch aus der Beschreibung und der Zeichnung hervor.

### Kurze Beschreibung der Zeichnungen

Ein Ausführungsbeispiel des Verfahrens und des Filterelements werden anhand der Zeichnungen beschrieben.
Hierbei zeigt:
Figur 1 ein schematisch dargestelltes Verfahren zur Stabilisierung eines Filterelements und
Figur 2 eine Ausführungsform eines erfindungsgemäßen Filterelements.

### Ausführungsform(en) der Erfindung

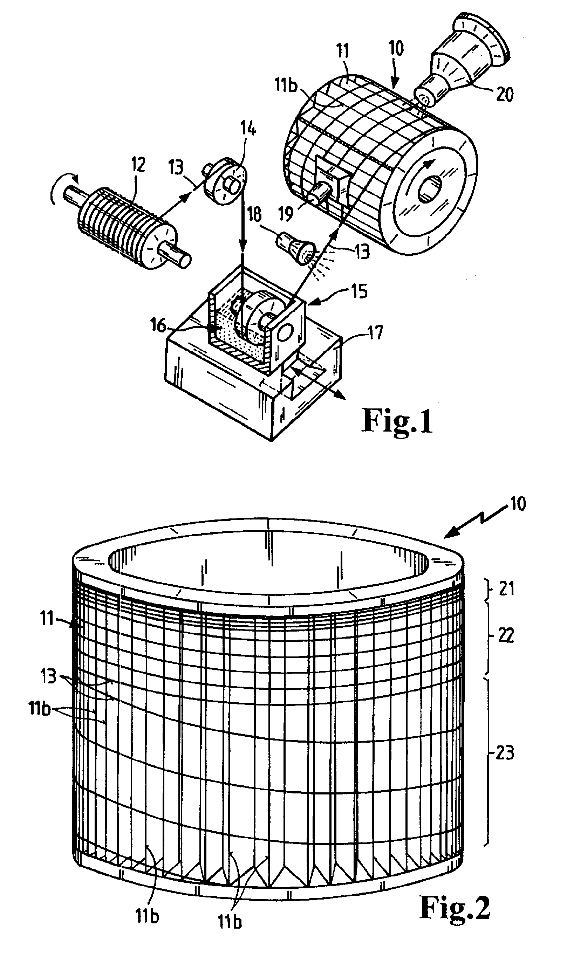

In Figur 1 ist ein Verfahren gezeigt, bei dem ein zick-zack- förmiges Filtermedium 11, welches Teil eines Filterelementes 10 ist, durch einen Faden 13 verstärkt wird. Der Faden 13 ist auf einer Spule 12 gewickelt und wird über eine Fadenführung 14 durch eine Schmelzkleberauftragseinheit 15 gezogen. In der Schmelzkleberauftragseinheit 15 befindet sich der durch Wärmeeinwirkung verflüssigte Schmelzkleber 16. Der Faden 13 tränkt sich mit dem Schmelzkleber 16 auf und wird im weiteren Verlauf auf das sich drehende Filtermedium 11 aufgewickelt. Dadurch kommt der Faden 13 mit den Faltenspitzen 11 b des Filtermediums 11 in Berührung. Die Schmelzkleberauftragseinheit 15 ist auf einer Führungseinheit 17 verschiebbar gelagert, wodurch der Faden 13 durch Verschieben in Längsachse des Filtermediums 11 schraubenförmig aufgewickelt wird. Zwischen der Schmelzkleberauftragseinheit 15 und der Berührung des Fadens 13 mit den Faltenspitzen 11 b, des Filtermediums 11, ist ein Wärmestrahler 18 angeordnet. Durch die Wärmeeinwirkung des Wärmestrahlers 18 wird die Aushärtung des auf dem Faden 13 befindlichen Schmelzklebers 16 verzögert. Dieser Effekt wird auch durch einen zweiten Wärmestrahler 19 erreicht, der den Schmelzkleber 16 noch erhitzt, wenn er sich bereits in Berührung mit den Faltenspitzen 11b befindet. Der zweite Strahler 19 kann dabei über einen Längsbereich des Filtermediums 11 wirken und mehrere Fäden gleichzeitig erwärmen. Um den auf dem Faden 13 befindlichen Schmelzkleber 16 gezielt abzukühlen, ist ein Kühlgebläse 20 gezeigt, welches ein beschleunigtes Aushärten des Schmelzklebers 16 bewirkt.

Figur 2 zeigt eine Ausführungsform eines Filterelements 10 mit einem Filtermedium 11, welches insbesondere durch das beschriebene Verfahren hergestellt ist. Der Faden 13 ist auf dem Filtermedium 11 aufgewickelt und mit den Faltenspitzen 11 b verklebt. Der schraubenförmig aufgewickelte Faden 13 weist verschiedene Gewindesteigungen auf. Im an der Stirnseite angrenzenden Verriegelungsbereich mit minimaler oder keiner Gewindesteigung überlappt sich der Faden 13. In einem Griffschutzbereich 22 ist die Gewindesteigung derart abgestimmt, dass eine sichere Handhabung des Filterelementes ohne die Gefahr eines Eindrückens möglich ist. Im Stabilisierungsbereich 23 ist die Gewindesteigung am größten und dient lediglich der radialen Stabilisierung der Falten des Filtermediums 11.

## Patentansprüche

1. Filtermediumsanordnung, insbesondere Filterelement, umfassend ein hohlzylindrisches, zick-zack-förmig gefaltetes Filtermedium, wobei die Stirnseiten der Zick-Zack-Faltung durch Endscheiben abgedichtet ist, sowie einen mit einem Schmelzkleber getränkten, schraubenförmig auf das Filtermedium gewickelten Faden, weicher an den äußeren Faltenspitzen anhaftet, **dadurch gekennzeichnet, dass** der schraubenförmig gewickelte Faden Bereiche mit verschiedenen Gewindesteigungen aufweist, wobei ein erster Bereich als Griffschutzbereich ausgebildet ist und ein zweiter Bereich als Stabilisierungsbereich ausgebildet ist.

2. Filtermediumsanordnung nach Anspruch 1, **dadurch gekennzeichnet, dass** im Griffschutzbereich die Gewindesteigung derart abgestimmt ist, dass die Filtermediumsanordnung ohne die Gefahr des Eindrückens handhabbar ist.

3. Filtermediumsanordnung nach einem der vorhergehenden Ansprüche, **dadurch gekennzeichnet, dass** ein an eine Stirnseite angrenzender Verriegelungsbereich vorgesehen ist, in welchem der Faden keine oder eine minimale Gewindesteigung aufweist.

4. Filtermediumsanordnung nach einem der vorhergehenden Ansprüche, **dadurch gekennzeichnet, dass** der Faden im Griffschutzbereiche eine Steigung von ca. 5-8 mm aufweist.

5. Filtermediumsanordnung nach einem der vorhergehenden Ansprüche, **dadurch gekennzeichnet, dass** der Faden im Stabilisierungsbereich eine Steigung von ca. 30 mm aufweist.

6. Filtermediumsanordnung nach einem der vorhergehenden Ansprüche, **dadurch gekennzeichnet, dass** mehrere Fäden als Doppelgewinde aufgebracht sind.

## Claims

1. Filter medium arrangement, in particular filter element, comprising a hollow-cylindrical fanfold filter medium, the end faces of the fanfold being sealed by end plates as well as a thread impregnated with a hotmelt adhesive wound helicoidally onto the filter medium which adheres to the outer pleat tips, **characterized in that** the helicoidally wound thread features areas with different thread pitches, a first area being designed as grip protection area and a second area being designed as stabilization area.

2. Filter medium arrangement according to claim 1, **characterized in that** the thread pitch is matched in the grip protection area such that the filter medium arrangement can be manipulated without risking to be indented.

3. Filter medium arrangement according to one of the above claims, **characterized in that** a locking area adjacent to an end face is provided in which the thread does not feature any or a minimal thread pitch.

4. Filter medium arrangement according to one of the above claims, **characterized in that** the thread in the grip protection area features a thread pitch of approx. 5-8 mm.

5. Filter medium arrangement according to one of the above claims, **characterized in that** the thread in the stabilization area features a thread pitch of approx. 30 mm.

6. Filter medium arrangement according to one of the above claims, **characterized in that** several threads are applied as double threads.

## Revendications

1. Ensemble de milieu filtrant, notamment élément filtrant, comprenant un milieu filtrant en forme de cylindre creux et plié en accordéon, les faces frontales du pli en accordéon étant étanchées par des disques d'extrémité, et un fil imbibé de colle thermofusible, enroulé en forme de vis sur le milieu filtrant et adhérant aux pointes extérieures du pli, **caractérisé en ce que** le fil enroulé en forme de vis présente des zones avec des pas de filetage différents, une première zone étant réalisée en tant que zone de protection pour la manipulation et une deuxième zone étant réalisée en tant que zone de stabilisation.

2. Ensemble de milieu filtrant selon la revendication 1, **caractérisé en ce que**, dans la zone de protection pour la manipulation, le pas de filetage est conçu de telle manière que l'ensemble de milieu filtrant peut être manipulé sans risque d'être enfoncé.

3. Ensemble de milieu filtrant selon l'une des revendications précédentes, **caractérisé en ce qu'**une zone de verrouillage contiguë à une face frontale est prévue, dans laquelle le fil ne comporte pas de pas de filetage ou comporte un pas de filetage minimal.

4. Ensemble de milieu filtrant selon l'une des revendications précédentes, **caractérisé en ce que** le fil comporte un pas de filetage d'env. 5 à 8 mm dans la zone de protection pour la manipulation.

5. Ensemble de milieu filtrant selon l'une des revendications précédentes, **caractérisé en ce que** le fil comporte un pas de filetage d'env. 30 mm dans la zone de stabilisation.

6. Ensemble de milieu filtrant selon l'une des revendications précédentes, **caractérisé en ce que** plusieurs fils sont montés en tant que filetage double.
